# EUROPEAN PATENT APPLICATION

(11) **EP 2 559 891 A2**
(43) Date of publication of application: **20.02.2013**
(21) Application number: 12179238.6
(22) Date of filing: 03.08.2012
(51) Int. Cl.: F03D 1/06

(54) **Wind turbine blade and method of protecting the same**

(30) Priority: 17.08.2011 US 201113211786
(71) Applicant: General Electric Company, Schenectady, NY 12345 (US)
(72) Inventor: Driver, Howard Daniel, Greenville, SC South Carolina 29615 (US); Riddell, Scott Gabell, Greenville, SC South Carolina 29615 (US)
(74) Representative: Szary, Anne Catherine

(57) **Abstract**

A turbine blade (112) for a wind turbine (100) includes a leading edge (122), a trailing edge (160) and a recess (162) located within the leading edge. The blade further includes a protective layer (156) having an inner side (182) and outer side (184), the inner side is sized and orientated to locate within the recess to facilitate withstanding impact forces applied by an object (167).

## Description

### BACKGROUND OF THE INVENTION

The subject matter described herein relates to wind turbines and, more particularly, to wind turbine blades and methods of protecting the wind turbine blades from environmental conditions.

Generally, a wind turbine includes a rotor that includes a rotatable hub assembly including multiple blades. The blades transform wind energy into a mechanical rotational torque that drives one or more generators via the rotor. At least some known generators are rotationally coupled to the rotor through a gearbox. The gearbox increases the inherently low rotational speed of the rotor for the generator to enable the rotational mechanical energy to be efficiently converted to electrical energy that is supplied to a utility grid. The rotor, generator, gearbox and other components are typically mounted within a housing or nacelle that is coupled to a base supported by a truss or tubular tower. At least some known wind turbines are nested together in a common geographical region to form a wind turbine farm.

In at least some known wind turbine farms, local environmental conditions, such as air conditions or weather conditions, induce erosion of the rotating blades. Leading Edges of the rotating blades are particularly subject to erosion and subsequent wear. Wind turbine blades located in severe environments, such as offshore and desert environments, may also be subject to leading edge wear or erosion, and/or resultant fractures from high velocity impact with objects such as rain, hail, seawater, sand, animals and/or other particulates. Such damage may increase operational maintenance and replacement costs, decrease electric power generation during associated maintenance outages, and/or decrease expected life spans of the blades.

In some of the known wind turbines, coatings are applied on the leading edges to inhibit erosion. Such coatings, however, provide only limited protection, and over time, the leading edges s may still erode. In other known wind turbines, a tape strip is applied to the leading edge. Tape strips, however, are known to separate from the blade leading edges during turbine operation. Moreover, the coating thickness and tape thickness are limited by the need to preserve the airfoil geometry of the wind turbine within acceptable limits. Still further, the benefits of coatings and/or tape strips may be offset by the increased capital costs of wind turbine construction and operational maintenance costs associated with installing the coatings and/or tape strips.

### BRIEF DESCRIPTION OF THE INVENTION

In one aspect, a turbine blade is provided. The blade includes a leading edge, a trailing edge and recess located between the leading edge and the trailing edge. The blade further includes a protective layer having an inner side and outer side, the inner side is sized and orientated to locate within the recess to facilitate withstanding impact forces applied by an object.

In another aspect, a wind turbine is provided. The wind turbine includes a blade having a leading edge, and a trailing edge and a recess along the leading edge. The wind turbine also includes a first protective layer coupled to the recess, wherein the first protective layer is configured to facilitate absorption impact from an object. The wind turbine further includes a second protective layer coupled to the first protective layer, wherein the second protective layer is configured to facilitate deflection of the object.

In yet another aspect, a method of manufacturing a blade for a wind turbine is provided. The method includes forming a recess within a leading edge of a blade and forming a protective layer. The method also includes depositing the protective layer within the recess and coupling the protective layer to the recess.

### BRIEF DESCRIPTION OF THE DRAWINGS

Fig. 1 is a schematic view of an exemplary wind turbine.
Fig. 2 is a partial sectional view of an exemplary nacelle assembly that may be used with the wind turbine shown in Fig. 1.
Fig. 3 is a schematic view of an exemplary turbine blade used with the wind turbine shown in Fig. 1.
Fig. 4 is a partial sectional view of a protective layer applied to the blade leading edge of Fig. 3.
Fig. 5 is partial schematic view of the protective layer shown in Fig. 4.
Fig. 6 is an alternative embodiment of a protective layer that may be coupled to the wind turbine blade shown in Fig. 3.
Fig. 7 is a flow diagram of an exemplary method that may be used in manufacturing the blade tip shown in Fig. 1.

### DETAILED DESCRIPTION OF THE INVENTION

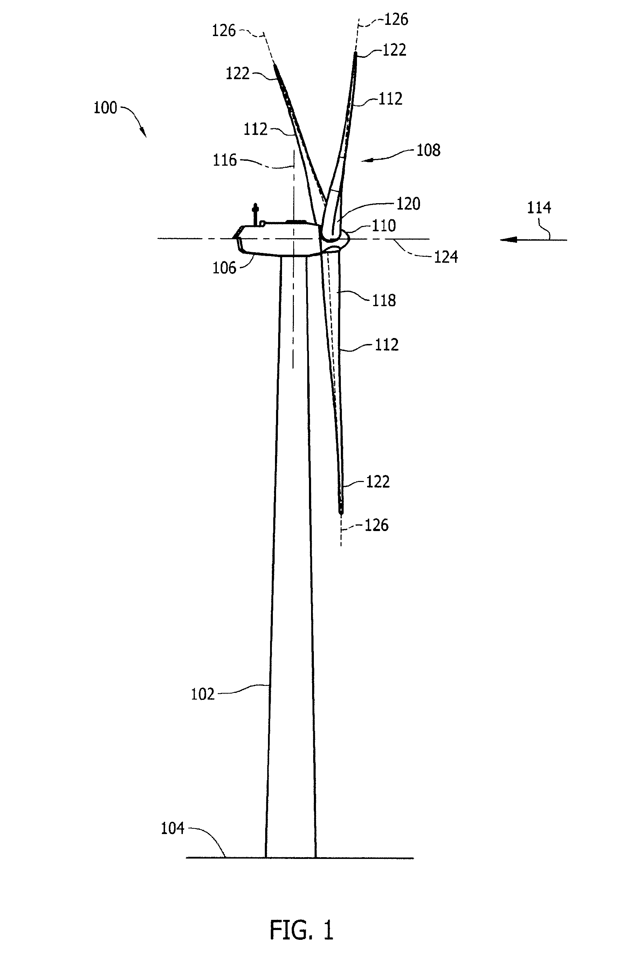

Fig. 1 is a schematic view of an exemplary wind turbine 100. In the exemplary embodiment, wind turbine 100 is a horizontal-axis wind turbine. Alternatively, wind turbine 100 may be a vertical-axis wind turbine. In the exemplary embodiment, wind turbine 100 includes a tower 102 extending from and coupled to a supporting surface 104. Tower 102 may be coupled to surface 104 with anchor bolts or via a foundation mounting piece (neither shown), for example. A nacelle 106 is coupled to tower 102, and a rotor 108 is coupled to nacelle 106. Rotor 108 includes a rotatable hub 110 and a plurality of rotor blades 112 coupled to hub 110. In the exemplary embodiment, rotor 108 includes three rotor blades 112. Alternatively, rotor 108 may have any suitable number of rotor blades 112 that enables wind turbine 100 to function as described herein. Tower 102 may have any suitable height and/or construction that enables wind turbine 100 to function as described herein.

Rotor blades 112 are spaced about hub 110 to facilitate rotating rotor 108, thereby transferring kinetic energy from wind 114 into usable mechanical energy, and subsequently, electrical energy. Rotor 108 and nacelle 106 are rotated about tower 102 on a yaw axis 116 to control a perspective, or azimuth angle, of rotor blades 12 with respect to the direction of wind 114. Rotor blades 112 are mated to hub 110 by coupling a blade root portion 118 to hub 110 at a plurality of load transfer regions 120. Each load transfer region 120 has a hub load transfer region and a blade load transfer region (both not shown in Fig. 1). Loads induced to rotor blades 112 are transferred to hub 110 via load transfer regions 120. Each rotor blade 112 also includes a blade leading edge 122.

In the exemplary embodiment, rotor blades 112 have a length of between approximately 30 meters (m) (99 feet (ft)) and approximately 120 m (394 ft). Alternatively, rotor blades 112 may have any suitable length that enables wind turbine 100 to function as described herein. For example, rotor blades 112 may have a suitable length less than 30 m or greater than 120 m. As wind 114 contacts rotor blade 112, blade lift forces are induced to rotor blade 112 and rotation of rotor 108 about an axis of rotation 124 is induced as blade is accelerated.

A pitch angle (not shown) of rotor blades 112, i.e., an angle that determines the perspective of rotor blade 112 with respect to the direction of wind 114, may be changed by a pitch assembly (not shown in Fig. 1). Increasing a pitch angle of rotor blade 112 decreases blade deflection by reducing aero loads on rotor blade 112 and increasing an out-of-plane stiffness from the change in geometric orientation. The pitch angles of rotor blades 112 are adjusted about a pitch axis 126 at each rotor blade 112. In the exemplary embodiment, the pitch angles of rotor blades 112 are controlled individually. Alternatively, the pitch angles of rotor blades 112 are controlled as a group.

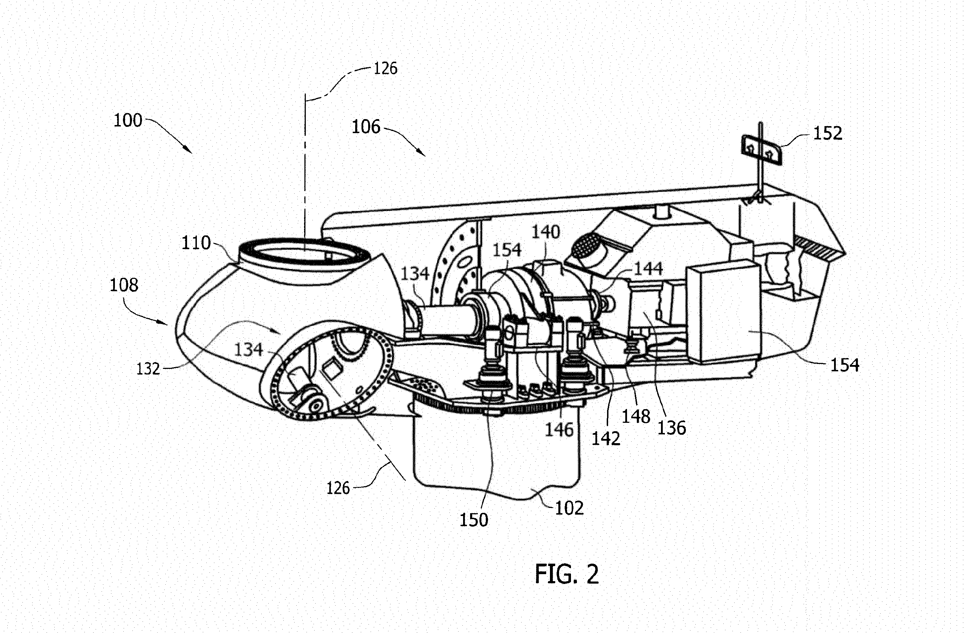

Fig. 2 is a partial sectional view of nacelle 106 of exemplary wind turbine 100. Various components of wind turbine 100 are housed in nacelle 106. In the exemplary embodiment, rotor 108 includes three pitch assemblies 132. Each pitch assembly 132 is coupled to an associated rotor blade 112 (shown in Fig. 1), and modulates a pitch of associated rotor blade 112 about pitch axis 126. Only one of three pitch assemblies 132 is shown in Fig. 2. In the exemplary embodiment, each pitch assembly 132 includes at least one pitch drive motor 134.

As shown in Fig. 2, rotor 108 is rotatably coupled to an electric generator 136 positioned within nacelle 106 via rotor shaft 138 (sometimes referred to as either a main shaft or a low speed shaft), a gearbox 140, a high speed shaft 142, and a coupling 144. Rotation of rotor shaft 138 rotatably drives gearbox 140 that subsequently drives high speed shaft 142. High speed shaft 142 rotatably drives generator 136 via coupling 144 and rotation of high speed shaft 142 facilitates production of electrical power by generator 136. Gearbox 140 is supported by support 146 and generator 136 is supported by support 148. In the exemplary embodiment, gearbox 140 utilizes a dual path geometry to drive high speed shaft 142. Alternatively, rotor shaft 138 is coupled directly to generator 136 via coupling 144.

Nacelle 106 also includes a yaw drive mechanism 150 that rotates nacelle 106 and rotor 108 about yaw axis 116 (shown in Fig. 1) to control the perspective of rotor blades 112 with respect to the direction of wind 114. Nacelle 106 also includes at least one meteorological mast 152 that includes a wind vane and anemometer (neither shown in Fig. 2). In one embodiment, mast 152 provides information, including wind direction and/or wind speed, to a control system cabinet 154. Control system cabinet 154 includes one or more controllers or other processors configured to execute control algorithms and control logic. As used herein, the term "processor" includes any programmable system including systems and microcontrollers, reduced instruction set circuits (RISC), application specific integrated circuits (ASIC), programmable logic circuits (PLC), and any other circuit capable of executing the functions described herein. The above examples are exemplary only, and thus are not intended to limit in any way the definition and/or meaning of the term processor. Moreover, control system cabinet 154 may house sufficient processing capabilities to execute support applications including, without limitation, a Supervisory, Control and Data Acquisition (SCADA) program.

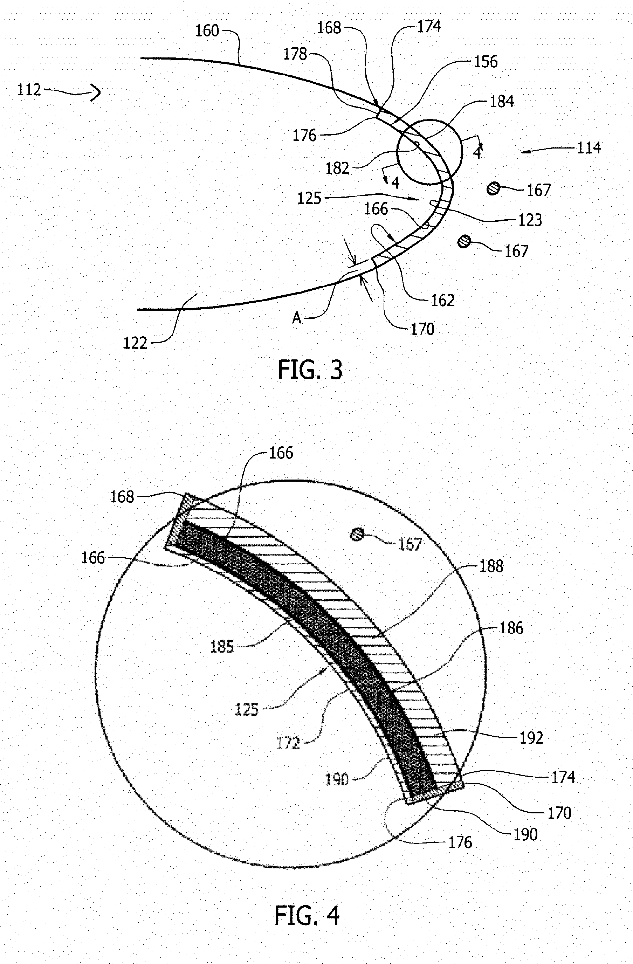

Fig. 3 is a schematic view of an exemplary embodiment of a protective layer 156 for use in protecting the blade leading edge 122. Blades 112 generate lift and capture momentum from moving air 114 that is imparted to rotor 108 as blades 112 rotate through the rotor plane. Each blade 112 is typically secured at its blade root portion 118, and spans radially outward to a blade tip 123. A distance from blade tip 123 to each root portion 118, at the opposite end of blade 112, is called the "span." The front or "leading edge" of blade tip 122 connects the forward-most points of blade 112 that initially contact the air 114. In an embodiment, leading edge 122 includes between approximately one half and approximately one third of the length of blade 112. The leading edge 122 includes the pressure side of blade 112. The rear or "trailing edge 160" of blade 112 is where airflow 114 that has been separated to pass over the suction and pressure surfaces of blade 112.

Leading edge 122 includes a protection area 125 having a recess 162 formed within blade 112. Protective layer 156 is applied within recess 162 and secured therein by a fastener 166. Protective layer 156 facilitates withstanding impact by an object 167 that is carried by air stream 114. Such objects 167 may include any item entrained within air stream 114 such as, but not limited to, rain, seawater, hail, sand, animals and/or particulates present in the environment around wind turbine 100.

Recess 162 includes a first end 168, a second end 170, and a surface 172 that extends between first end 168 and second end 170. First end 168 and second end 170 each include an outer edge 174, an inner edge 176, and a wall 178 that extends between outer edge 174 and inner edge 176. Outer edge 174 terminates near blade leading edge 158 and inner edge 176 terminates at recess surface 172. In one embodiment, each wall 178 is orientated at an angle approximately equal to 90° with respect to surface 172. Walls 178 may be oriented at other angles with respect to surface 172 in other embodiments.

The length denoted "A" at end wall 178 is measured between outer edge 174 and inner edge 176. In the exemplary embodiment, length A is between approximately 0.1 millimeter (mm) (0.004 inches (in.)) and approximately 40 mm (1.58 in.). In another embodiment, length A is between approximately 0.1 mm (.004 in.) and approximately 8 mm (.31 in.). Any size, shape and orientation of recess 162 that receives protective layer 156 are intended to be within the scope of the disclosure herein.

Protective layer 156 substantially maintains the airfoil geometry of leading edge 122. More specifically, protective layer 156 includes an inner side 182 and an outer side 184. Fastener 166 facilitates securing surface inner side 182 to recess surface 172 of such that inner side 182 is within recess 162 and is between the walls 178 of first and second ends 168 and 170. Outer side 184 is sized and orientated to substantially match a profile of leading edge 158 such that the blade airfoil geometry is maintained. In the exemplary embodiment, fastener 166 includes an adhesive 185 (shown in Fig. 4) that facilitates coupling inner side 182 to surface 172. Adhesive 185 may include a double sided adhesive tape. Alternativley, adhesive 185 includes a double sided foam acrylic tape. In other embodiments (not shown), fastener 166 may include connectors such as, but not limited to, bolts, screws or anchors that facilitate coupling protective layer 156 within recess 162. Fastener 166 may have any suitable configuration that enables coupling protective layer 156 within recess 162 as described herein.

Fig. 4 is a partial sectional view of protective layer 156. In the exemplary embodiment, protective layer 156 includes a first protective layer 186 coupled with a second protective layer 188. First protective layer 186 facilitates providing an elastic foundation for second protective layer 188. Alternatively, protective layer 156 may have any number of protective layers that enable absorption and deflection of objects 167 as described herein. First protective layer 186 is sized and oriented to extend between first and second ends 168 and 170 and is in contact with surface 172. Fastener 166 facilitates coupling first protective layer 186 against surface 172.

In the exemplary embodiment, first protective layer 186 includes an elastic material 190 that facilitates absorbing forces induced by an object 167 to leading edge 122. Upon receiving impact forces, first protective layer 186 deforms temporarily to a deformed position. First protective layer 186 returns from the deformed position to its original position. In the exemplary embodiment, elastic material 190 includes at least one of an epoxy, polyurethane, rubber and acrylic material. In another embodiment, elastic material 190 is an acrylic foam. Alternatively, elastic material 190 in first protective layer 186 may include any suitable material that enables force absorption while substantially maintaining airfoil geometry of blade 112 and wind turbine operation as described herein.

Second protective layer 188 is sized and oriented to locate between first and second ends 168, 170 and in contact with first protective layer 186. Fastener 166 facilitates coupling second protective layer 188 to first protective layer 186. In the exemplary embodiment, second protective layer 188 includes a deflection material 192 that facilitates deflection of forces applied by object 167 to leading edge 122. In the exemplary embodiment, deflection material 192 includes at least one of a nylon, hydrocarbon polymer, synthetic resin, polyethylene and polyproprelene material including respective high molecular weights. Elastic material 190 of second protective layer 188 may include any suitable material that enables force deflection while substantially maintaining airfoil geometry of blade 112 and wind turbine operation as described herein.

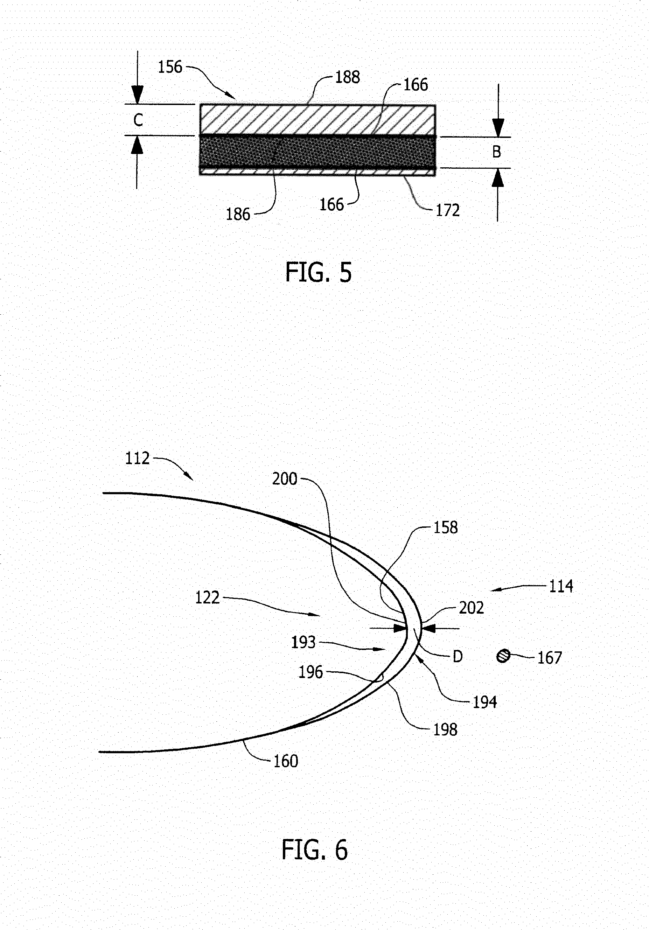

Fig. 5 is partial schematic view of protective layer 156. In the exemplary embodiment, first protective layer 186 has a thickness B measured from surface 172. More specifically, in the exemplary embodiment, thickness B has a range between approximately 0.1 mm (.004 in.) and approximately 20 mm (.80 in.). In another embodiment, first protective layer 186 has a thickness B between approximately 0.3 mm (.01 in.) and approximately 3 mm (.1 in.). Alternatively, first protective layer 186 may have any thickness B that enables force absorption and wind turbine operation as described herein.

In the exemplary embodiment, second protective layer 188 has a thickness, denoted "C", as measured from surface 172 in range between approximately 0.1 mm (.004 in.) and approximately 20 mm (.8 in.). In an embodiment, second protective layer 188 has a thickness between approximately 0.1 mm (.004 in.) and approximately 5 mm (.2 in.). Second protective layer 188 may include any thickness that enables force deflection and wind turbine operation as described herein.

Fig. 6 is schematic view of another exemplary embodiment of a protection area 193 of leading edge 122. Protection area 193 includes a protective layer 194 coupled thereto. Protective layer 194 facilitates withstanding impact by object 167 such as, but not limited to, rain, seawater, hail, sand, animals and/or particulates present in environment around wind turbine blade 112. Protective layer 194 is sized and orientated to locate about leading edge 122. Protective layer 194 includes an inner side 196 and an outer side 198.

Fastener 166 facilitates coupling inner side 196 to protection area 193 of leading edge 122. Inner side 182 is sized and orientated to profile with leading edge 122 to facilitate maintaining airfoil geometry of blade 122. In the exemplary embodiment, fastener 166 includes an adhesive to facilitate coupling inner side 182 to surface 172. In or embodiments (not shown), fastener 166 may include connectors such as, but not limited to, bolts, screws or anchors to facilitate coupling protective layer 194 to leading edge 158. Fastener 166 may have any suitable configuration to couple protective layer 194 to leading edge 122.

In the exemplary embodiment, thickness denoted "D" of protective layer 194 as measured from an end 198 of leading edge 122 is between approximately 0.1 mm (0.004 in) and approximately 40 mm (1.6 in.). Protective layer 194 is tapered to a zero thickness from leading edge 122 to trailing edge 160. In the exemplary embodiment, protective layer 194 includes first protective layer 186 and second protective layer 188 as set forth above. Alternatively, protective layer 194 may have any suitable number of protective layers that enable absorption and deflection of objects 167 to function as described herein.

In the exemplary embodiment, first protective layer 186 includes elastic material 190 that facilitates absorption of forces applied by object 167 to leading edge 122. Upon receiving impact forces, first protective layer 186 deforms temporarily from an original position to a deformed position. First protective layer 186 returns from deformed position to original position. Additionally, second protective layer 188 includes deflection material 192 that facilitates deflection of forces applied by object 167 to blade tip 196.

During operation of wind turbine 100, airstream 114 impacts blades 112 to cause blades 112 to rotate about rotor 108. Depending on environmental conditions, objects 167 present in airstream 144 may strike blade 112. In particular, objects 167 strike an outer side 184 of protective layer 156 and impact forces are transferred through second protective layer 188 into first protective layer 186. In response, the material composition of first protective layer 186 facilitates absorbing the transmitted forces and temporarily deforms from its original position to a deformation position. The absorption and deformation of first protective layer 186 facilitates minimizing and/or eliminating impact forces induced through blade 112 to rotor 108. After absorbing the impact forces, first protective layer 186 returns to its original position.

When an object 167 strikes second protective layer 188, second protective layer 188 deflects object 167 to facilitate protecting leading edge 122. In addition, the material composition of second protective layer 188 facilitates minimizing and/or eliminating erosion effects created by the striking objects 167 such as, but not limited to, chipping, cracking or deformation of second protective layer 188.

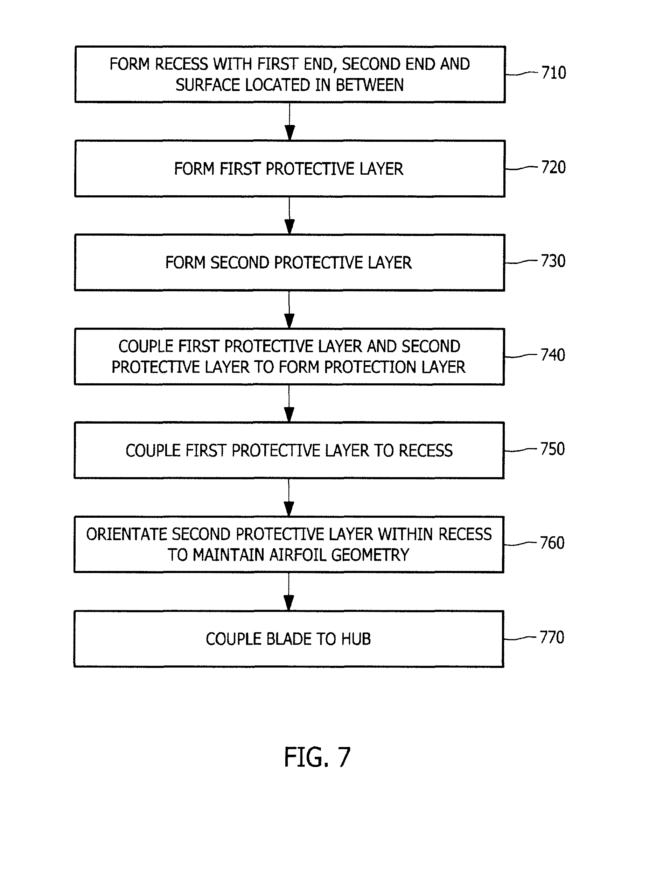

Fig. 7 is a flow diagram of an exemplary method of manufacturing leading edge 122 shown in Fig. 1. In the exemplary embodiment, any or all of the manufacturing processes can be performed on a new assembly of a wind turbine or on an existing wind turbine.

Initially, recess 162 is formed 710 in leading edge 122 of blade 112. Recess 162 is formed having first end 168, second end 170 and surface 172 that extends between first end 168 and second end 170. Surface 172 is smoothly formed to facilitate interaction with fastener 166. Alternatively, surface can be formed with a non-smooth configuration (not shown), having structures such as, but not limited to, bores or voids. These surface structures facilitate coupling with fastener (not shown) having connectors such as screws, bolts or anchors. Recess 162 can be formed by a variety of manufacturing processes such as molding, drawing or machining processes. Any manufacturing process to form recess 162 is intended to be within disclosure described herein.

First protective layer 186 is formed and shaped 720 from elastic material 190. Second protective layer 188 is formed and shaped 730 from deflection material 192. First and second protective layers 186, 188 can be formed by a variety of manufacturing processes such as molding, impregnation, drawing or machining processes. Any manufacturing process to form first and second protective layer 168, 188 is intended to be within disclosure described herein.

Protective layer 156 is formed 740 by coupling together, by fastener 166, first and second protective layers 168, 188. In the exemplary embodiment, fastener 166 includes an adhesive. Next, first protective layer 186 is coupled 750 to recess 162 by fastener 166. Second protective layer 188 is orientated 760 within recess 162 to maintain airfoil geometry of leading edge 122. Blade 112 having protective layer 156 is coupled 770 to hub 110.

In an alternative method of manufacturing (not shown), the first protective layer is formed and shaped from the elastic material in a tapered configuration. Next, the second protective layer is formed and shaped from the deflection material in a tapered configuration. The protective layer is formed by coupling together, by the fastener, the first and second protective layers. Next, the first protective layer is coupled to the leading edge of the blade tip via the fastener. The second protective layer is coupled to the leading edge to maintain the airfoil geometry of the blade tip.

The embodiments described herein provide an erosion protective layer for use with a blade of a wind turbine. The disclosed dimensional ranges include all sub ranges therebetween. The dimensional ranges for the protective layer facilitate absorbing and deflecting objects striking the blade while substantially maintaining the airfoil geometry of blade. Additionally, the dimensional ranges for the protective layer facilitate manufacturing and assembly of the blade and/or wind turbine while reducing material, transportation and assembly costs. The protective layer can be integrated within the new manufacture of wind turbines or retrofitted within existing wind turbines to facilitate preventing erosion of the blade tip of the wind turbine. The embodiments of the protective layer provides that wind turbine blades, located in severe environments, such as offshore or desert environments, withstand blade wear or erosion, and/or resultant fractures from high velocity impact with objects such as rain, hail, seawater, animals and/or other particulates.

The embodiments described herein protect the blade that is subject to wear, erosion and degradation that arise by objects carried in the air stream. Objects may impact the blade tip at high velocity which may lead to chipping, cracking or otherwise deforming the blade. The protective layer absorbs impact forces applied by the object to the blade. The protective layer can be recessed within the blade tip to absorb impact forces and to deflect objects. The protective layer can also applied to a leading edge of the blade tip to facilitate absorbing and deflecting objects contacting the blade. The protective layer described herein facilitates increasing turbine life while decreasing capital costs of construction and operational costs associated with routine preventative and corrective maintenance.

An exemplary technical effect of the protective layer described herein is to facilitate reducing erosion of the blades of the wind turbine, thereby increasing the operational life of the wind turbine. A recess located in the leading edge of the wind turbine blade is subject to environmental conditions. The recess provides a space in which the protective layer is applied such that necessary airfoil geometry and performance are maintained. The protective layer described herein absorbs impact forces induced to the blade. The force absorption facilitates reducing impact energy transmitted to a rotor of the wind turbine. A further technical effect of the protective layer described herein includes deflecting the impact from objects such as, but not limited to, rain, hail, sand, animals and/or particulates without chipping, cracking or otherwise deforming the blade to compromise the wind turbine performance. A further technical effect of the protective layer described herein is to facilitate reducing erosion for a plurality of wind turbines nested in a wind turbine farm.

Exemplary embodiments of a wind turbine, protective layer, and a method of manufacturing a blade are described above in detail. The wind turbine, wind turbine farm, protective layer, and method are not limited to the specific embodiments described herein, but rather, components of the wind turbine and/or the protective layer and/or steps of the method may be utilized independently and separately from other components and/or steps described herein. For example, the protective layer and method may also be used in combination with other power systems and methods, and are not limited to practice with only the wind turbine and wind turbine farm as described herein. Rather, the exemplary embodiment can be implemented and utilized in connection with many other turbine or power system applications. Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any layers or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A blade for use with a wind turbine, said blade comprising:
   a leading edge, a trailing edge and protection area located along said leading edge; and
   a protective layer comprising an inner side and outer side, said inner side is sized and
   orientated to couple with said protection area to facilitate withstanding impact forces induced by an object contacting said blade.
2. The blade of Clause 1, wherein said protection area comprises a recess located within said leading edge.
3. The blade of Clause 1, wherein said protective layer comprises a first protective layer and a second protective layer.
4. The blade of Clause 3, wherein said first protective layer comprises an elastic material that facilitates absorbing forces induced by said object.
5. The blade of Clause 4, wherein said elastic material comprises an acrylic foam.
6. The blade of Clause 3, wherein said second protective layer comprises at least one of nylon, hydrocarbon polymer, synthetic resinous material, polyethylene and polypropylene.
7. The blade of Clause 2, further comprising a fastener configured to couple said inner side within said recess.
8. The blade of Clause 7, wherein said fastener comprises an adhesive.
9. A wind turbine comprising:
   a blade comprising a leading edge and a trailing edge and a recess located within said leading edge, said recess comprising:
      a first end, a second end and a surface between said first end and said second end;
      a first protective layer coupled to said surface and between said first end and said second end, said first protective layer configured to facilitate absorption impact from an object; and
      a second protective layer coupled to said first protective layer, said second protective layer configured to facilitate deflection of said object.
10. The wind turbine of Clause 9, further comprising a fastener sized and oriented to facilitate coupling said first protective layer to said surface.
11. The wind turbine of Clause 9, further comprising a fastener sized and oriented to facilitate coupling said second protective layer to said first protective layer.
12. The wind turbine of Clause 9, wherein said first protective layer comprises an elastic material to facilitate absorption of said object impact.
13. The wind turbine of Clause 9, wherein said second protective layer comprises a deflection material.
14. The wind turbine of Clause 9, wherein said fastener comprises an adhesive.
15. A method of manufacturing a blade for use with a wind turbine, the method comprising:
   forming a recess within a leading edge of the blade;
   forming a protective layer;
   depositing the protective layer within the recess; and
   coupling the protective layer to the recess.
16. The method of Clause 15, wherein forming the recess comprises forming a first end and a second end within the leading edge.
17. The method of Clause 16, further comprising forming a surface between the first and second ends.
18. The method of Clause 17, wherein forming the protective layer comprises coupling a first protective layer to a second protective layer.
19. The method of Clause 18, wherein depositing the protective layer comprises coupling the first protective layer to the surface.
20. The method of Clause 19, wherein depositing the protective layer comprises orientating the second protective layer in an airfoil geometry with the leading edge.

## Claims

1. A blade (112) for use with a wind turbine (100), said blade comprising:
a leading edge (122), a trailing edge (160) and protection area (125) located along said leading edge; and
a protective layer (156) comprising an inner side (182) and outer side (184), said inner side is sized and orientated to couple with said protection area to facilitate withstanding impact forces induced by an object (167) contacting said blade.

2. The blade of Claim 1, wherein said protection area (125) comprises a recess (162) located within said leading edge (122).

3. The blade of Claim 1 or Claim 2, wherein said protective layer (156) comprises a first protective layer (186) and a second protective layer (188).

4. The blade of Claim 3, wherein said first protective layer (186) comprises an elastic material that facilitates absorbing forces induced by said object.

5. The blade of Claim 4, wherein said elastic material comprises an acrylic foam.

6. The blade of any one of Claims 3 to 5, wherein said second protective layer (188) comprises at least one of nylon, hydrocarbon polymer, synthetic resinous material, polyethylene and polypropylene

7. The blade of any one of Claims 2 to 6, further comprising a fastener (166) configured to couple said inner side (182) within said recess (162).

8. The blade of Claim 7, wherein said fastener (166) comprises an adhesive.

9. The blade of any one of Claims 3 to 8, wherein said second protective layer (188) comprises a deflection material.

10. A method of manufacturing a blade (112) for use with a wind turbine (100), the method comprising:
forming a recess (162) within a leading edge (122) of the blade (112);
forming a protective layer (156);
depositing the protective layer (156) within the recess (162); and
coupling the protective layer (156) to the recess (162).

11. The method of Claim 10, wherein forming the recess (162) comprises forming a first end (168) and a second end (170) within the leading edge (122).

12. The method of Claim 11, further comprising forming a surface between the first (168) and second (170) ends.

13. The method of Claim 12, wherein forming the protective layer (156) comprises coupling a first protective layer (186) to a second protective layer (188).

14. The method of Claim 13, wherein depositing the protective layer (156) comprises coupling the first protective layer (186) to the surface.

15. The method of Claim 14, wherein depositing the protective layer (156) comprises orientating the second protective layer (188) in an airfoil geometry with the leading edge (122).
